# EUROPÄISCHE PATENTSCHRIFT

(11) **EP 3 597 144 B1**
(45) Veröffentlichungstag und Bekanntmachung des Hinweises auf die Patenterteilung: **27.01.2021**
(21) Anmeldenummer: 18183662.8
(22) Anmeldetag: 16.07.2018
(51) Int. Cl.: A61C 13/10, A61C 13/00

(54) **EIN- ODER MEHRTEILIGER DENTALER PROTHESENROHLING UND DESSEN HERSTELLUNGSVERFAHREN**
SINGLE OR MULTIPLE DENTAL PROSTHESIS BLANK AND METHOD OF PRODUCING THE SAME
PRÉFORME SIMPLE OU MULTIPLE DE PROTHÈSE DENTAIRE ET MÉTHODE DE PRODUCTION DE CETTE PRÉFORME

(43) Veröffentlichungstag der Anmeldung: 22.01.2020
(73) Patentinhaber: Ivoclar Vivadent AG, 9494 Schaan (LI)
(72) Erfinder: Geier, Markus, 39010 Tisens (IT); Frenzel, Frank, 9472 Grabs (CH); Baaske, Thomas, 8885 Mols (CH); Frei, Roger, 9435 Heerbrugg (CH)
(74) Vertreter: Baronetzky, Klaus

(56) Entgegenhaltungen:
- EP-A1- 3 064 170
- CN-A- 102 805 670
- US-A1- 2014 234 802
- US-A1- 2018 042 705

## Beschreibung

Die Erfindung betrifft einen ein- oder mehrteiligen dentalen Prothesenrohling und ein Verfahren zur dessen Herstellung.

Es ist seit längerem bekannt, Prothesen aus zahnfarbenem Material und fleischfarbenem Material herzustellen und die Prothesen so zu fräsen, dass aus dem zahnfarbenen Material der Zahnbogen und aus dem fleischfarbenen Material die Prothesenbasis erstellt wird.

Typischerweise werden hierbei für die beiden Materialien Kunststoffe auf PMMA-Basis verwendet. Diese beiden Materialien lassen sich gut aneinander befestigen, beispielsweise durch Kleben oder Anpolymerisieren.

Das zahnfarbene Material kann auch gleich in Form eines vollständigen Zahnbogen gefertigt werden, also dergestalt, dass die Einzelzelle mindestens durch schmale Stege miteinander verbunden sind und insofern der Zahnbogen einstückig ist.

Für die Befestigung des Zahnbogens an der Prothesenbasis ist es bekannt, eine Art U-förmigen Kanal vorzusehen, in den der Zahnbogen eingeklebt wird.

Je nach Größe des erwünschten Zahnbogen musste der Kanal an unterschiedlichen Stellen vorgesehen sein.

Um trotz der Verwendung eines derartigen Kanals ein ästhetisch einigermaßen befriedigendes Ergebnis zu erzielen, wird die Gingivalinie im fleischfarbenen Material als Kettenlinie gefräst. Dies ist recht kompliziert, denn die Linie muss zu dem je zu erzeugenden Zahnbogen passen.

Als Beispiele hierfür seien die aus der WO 90/13268 A1 und aus der WO 91/07141 A1 bekannten Lösungen genannt.

Basierend auf diesen recht alten Lösungen sind in neuerer Zeit unter Zuhilfenahme der CAD/CAM-Technik auch mehrschichtige Kunststoffelemente vorgeschlagen worden, die der Erstellung von Zähnen und Prothesen zur Bereitstellung von Zähnen und der Prothesenbasis zur Bereitstellung einer fertigen Prothese dienen sollen. Aufgrund der unterschiedlichen Erfordernisse an die verschiedenen Materialien, nämlich des fleischfarbenen Prothesenbasismaterials einerseits und des zahnfarbenen Zahnmaterials andererseits hat sich dieser Vorschlag bislang nicht durchgesetzt, und zwar auch nicht, obwohl es bereits anderweitig bekannt geworden ist, sowohl Zähne als auch eine Prothesenbasis aus PMMA zu fertigen.

Ferner sind in neuerer Zeit Rapid-Prototyping-Verfahren vorgeschlagen worden, mit dem Ziel, sowohl Zähne als auch Prothesenbasen aus Kunststoffmaterial - oder gegebenenfalls auch aus anderen Materialien - bereitzustellen. Auch diese Entwicklung hat bis jetzt keine rechten Fortschritte erfahren.

Andererseits besteht in Hinblick auf die zunehmende Lebenserwartung eine zunehmende Nachfrage nach Voll- und Teilprothesen, wobei hier der Einfachheit halber unter dem Begriff Prothesen sowohl Voll- als auch Teilprothesen subsumiert werden. Dieser zunehmende Bedarf ist gepaart mit einem ebenfalls zunehmenden Kostendruck, bereits aufgrund der zu erwartenden sich erheblich steigernden Nachfrage.

Aus der EP 3 064 170 A1 ist es bekannt, die Grenzfläche zwischen den Materialien als sich strahlenförmig erstreckende Wellenform zu erstellen. Die Wellenform kann dann gleich die Kettenlinie des Gingivasaums abbilden.

Diese Version hat den Vorteil, dass unabhängig von der Größe des erforderlichen Zahnbogen stets gleichsam automatisch der Gingivasaum erzeugt wird, so dass mögliche Fehler insofern automatisch vermieden werden.

Aufgrund des Kostendruck ist es häufig erwünscht, Dentalprothesen mit Fräsmaschinen zu fertigen, die preisgünstig zu beschaffen sind. Derartige Fräsmaschinen haben eine Wiederholgenauigkeit von z.B. 0,5 mm, auch wenn sie mit 0,1 mm oder sogar 0,05 mm beworben werden. Zudem sind derartige Fräsmaschinen häufig lediglich 4-Achs-Maschinen, so dass insbesondere die Erstellung von Hinterschneidungen Probleme bereitet.

Andererseits sind im zahnlosen anterioren Bereich, also im Frontzahnbereich, durch den Zahnverlust starke Unterschnitte erforderlich.

Bei den bekannten Lösungen müssen zudem recht lange Fräswerkzeuge verwendet werden. Bei langen Fräswerkzeugen entsteht zwangsläufig eine geringere Genauigkeit, zum einen aufgrund der Nachgiebigkeit eines dünnen und schlanken Fräswerkzeug, insbesondere bei unterschiedlichen Vortriebsgeschwindigkeiten, und zum anderen gegebenenfalls aufgrund von Schwingungen, die beim Fräsvorgang entstehen.

Demgegenüber liegt der Erfindung die Aufgabe zugrunde, einen ein- oder mehrteiligen dentalen Prothesenrohling zu schaffen, der bei der Verwendung vergleichsweise preisgünstiger Fräsmaschinen dennoch eine genau herzustellende und ästhetisch vorteilhafte Prothese ermöglicht.

Diese Aufgabe wird erfindungsgemäß durch Ansprüche 1 und 18 gelöst. Vorteilhafte Weiterbildungen ergeben sich aus den Unteransprüchen.

Erfindungsgemäß ist es vorgesehen, einen Rohling aus zahnfarbenem und fleischfarbenem Material aufzubauen, die eine Grenzfläche haben, die in einer Wellenlinie vorgesehen ist. Die Wellenlinie kann einer Kettenlinie ähnlich dem Gingivasaum ausgebildet sein und ist über den gesamten Zahnbogen realisiert.

Mindestens im Frontzahnbereich ist die Wellenlinie strahlenförmig, bildet also vom Strahlen-Mittelpunkt ausgehend Wellentäler und Wellenberge - also Nuten und Rippen - aus, die sich je radial erstrecken.

Erfindungsgemäß ist die Grenzfläche in besonderer Weise ausgebildet. Sie steigt in Wellen entsprechend der Wellenlinie an, mit einer durchschnittlichen Steigung von 15 Grad oder mehr, und zwar so, dass distal das zahnfarbene Material in größerer Höhe vorliegt als medial.

Die Grenzfläche ist also wellenförmig geneigt, und zwar auch bezogen auf die spätere Okklusionsebene. Ferner ist es vorgesehen, dass die Posterioren eine größere Höhe als die Anterioren haben. Dies kommt in einer entsprechenden Höhengebung des zahnfarbenen Materials zum Ausdruck.

Das zahnfarbene Material liegt daher distal in einer größeren Höhe vor als mesial.

Die Höhe bezieht sich hier auf die im Rohling vorliegende Höhe. Dieser kann eine flache Scheibe sein, die einen im Wesentlichen kreisförmigen Querschnitt hat. Die Außenfläche, also die Umfangsfläche des Rohlings kann von der Zylinderform deutlich abweichen, wie es weiter unten im Einzelnen beschrieben ist.

Erfindungsgemäß ist es vorgesehen, dass die Anterioren mit ihrer Grenzfläche vergleichsweise nahe an der benachbarten Oberseite des Rohlings ausgebildet sind. Hierdurch ist es möglich, gerade im Frontzahnbereich mit vergleichsweise kurzen Fräswerkzeugen zu arbeiten. Dies ermöglicht eine schwingungsarme und vortriebsgeschwindigkeitsunabhängige genaue Fertigung.

Ferner ist es aufgrund der Nähe zur Oberseite des Rohlings auch möglich, Hinterschneidungen und Unterschneidungen zu fräsen, wie es gerade bei zahnlosen Patienten, also der Herstellung von Vollprothesen, häufig erforderlich ist.

Erfindungsgemäß ist es günstig, dass zudem eine vergleichsweise flache Prothese mit dementsprechend einem geringen Materialaufwand hergestellt werden kann. Die mit der erfindungsgemäßen Lösungen zu realisierende Prothese hat typischerweise im Molarenbereich eine größere Zahnhöhe als üblich. Dies ist zum einen mechanisch vorteilhaft, da durch die größeren und wuchtigen Molaren große Kaukräfte besser in die Prothese verteilt werden können. Zum anderen fällt die Höhe der Molaren selbst bei geöffnetem Mund typischerweise nicht oder nur wenig auf, so dass dies gerade im Oberkiefer ästhetisch unkritisch ist, auch wenn ein menschlicher Zahnbogen typischerweise keineswegs eine solche Formgebung hat.

Das zahnfarbene Material hat erfindungsgemäß im Molarbereich eine größere Höhe in gingival-okklusaler Richtung als im Frontzahnbereich. Die Frontzahnhöhe wird eher knapp gewählt - aber so, dass auch die größten erforderlichen Frontzähne in das zahnfarbene Material noch gerade so hereinpassen.

Zu den Eckzähnen hin, und über diese hinaus, wird die Höhe des Zahnmaterials größer. Damit läßt sich auch elegant der Tatsache Rechnung tragen, dass häufig die menschlichen Eckzähne die größte freiliegende Länge aufweisen; bereits deren Bereich ist erfingsungsgemäß aufgrund der ansteigenden Kammlinie höher als der Frontzahnbereich.

Erfindungsgemäß besonders günstig ist es, das bei einer größeren Neigung der Grenzfläche ein erheblich größerer Anteil der Patienten versorgbar ist. Bei einer Neigung von 20 bis 25% beträgt der Anteil immerhin 80% anstelle der bislang üblichen 60%.

Ein weiterer Vorteil liegt darin begründet, dass der Rohling eine geringere Höhe als bislang haben kann. Diese kann beispielsweise zwischen 34 mm und 40 mm betragen.

Die Menge des erforderlichen PMMA-Materials, das in der Dentalqualität recht teuer ist, lässt sich erfindungsgemäß deutlich reduzieren, und aufgrund der geringeren Scheibenhöhe ist auch die Fräszeit bis zur Erstellung der fertigen Prothese kürzer.

Die Erfindung ist nicht auf die Realisierung einer Vollprothese beschränkt. Vielmehr ist unter den Begriff "Prothese" auch eine Teilprothese und unter den Begriff "Zahnbogen" auch ein Teilzahnbogen zu subsumieren.

Soweit der Zahnbogen als U-förmig bezeichnet ist, ist hierunter dementsprechend auch teil-U-förmig zu subsumieren.

Die Erfindung ist auch nicht auf den Oberkiefer oder den Unterkiefer beschränkt, vielmehr lässt sich der erfindungsgemäße Gedanke sowohl bei einer Oberkieferprothese als auch bei einer Unterkieferprothese realisieren.

Das zahnfarbene Material kann im Rohlingen zahnbogenförmig realisiert sein, in Form eines breitschenkligen U oder aber scheibenförmig. Im ersten Fall deckt die Breite des Us den Bereich ab, in welchem Zähne je nach Größe des erwünschten Zahnbogen hergestellt werden können, wobei dieser Bereich hier als Formgebungsbereich bezeichnet wird.

Das fleischfarbene Material erstreckt sich so, dass es die Scheibenform des Rohlings füllt, bis zur Unterseite des Rohlings.

Die Scheibenform des Rohlings kann auch schräg realisiert sein. In diesem Fall lässt sich der Fräsrohling noch flacher herstellen, wobei durch die Schrägstellung die Höhe des zahnfarbenen Materials im Bereich des Molaren noch verringert wird.

Ein Einspannrand des Rohlings erstreckt sich bei dieser Ausführungsform schräg zur Oberseite und zur Unterseite des Rohlings. Die Neigung der Grenzfläche, wie sie erfindungsgemäß vorgesehen ist, bezieht sich in diesem Fall auf die vom Einspannrand aufgespannte Fläche.

Bei dieser Ausführungsform ist die Neigung der Oberseite und der Unterseite des Rohlings bezogen auf den Einspannrand jedenfalls geringer als die Neigung der Grenzfläche bezogen auf diesen. Sie kann beispielsweise 8 oder 10 Grad betragen.

Bei dieser Ausführungsform ergibt sich eine noch weiter verbesserte Zugänglichkeit zu Hinterschnitten und Unterschnitten, so dass bis zu 90% der Patienten versorgbar sind.

In weiterer vorteilhafter Ausgestaltung der Erfindung ist es vorgesehen, sowohl oberhalb als auch unterhalb des Einspannrandes eine Verdrehsicherung zu realisieren.

Insbesondere ist es vorgesehenen, auf einer Seite, z.B. der weißen Seite oder Oberseite des Rohlings, eine klassische Verdrehsicherung mit asymmetrisch verteilten Nuten zu realisieren, und auf der gegenüberliegenden Seite, also unterhalb des Einspannrandes, eine solche mit asymmetrisch verteilten Abflachungen, für andere Werkstück-Aufnahmen von neueren Fräsmaschinen.

In vorteilhafter Ausführungsform ist eine zusätzliche Schicht aus einem Material mit abweichenden lichtbrechenden Eigenschaften, insbesondere aufgrund unterschiedlicher Brechungsindices dieses Materials gegenüber dem fleischfarbenen und dem zahnfarbenen Material, zwischen dem zahnfarbenen und dem fleischfarbenen Material angeordnet.

Diese Eigenschaften werden durch enthaltene organische und/oder anorganische Bestandteile begünstigt, welche zur Veränderung der Transparenz respektive Opazität der Schicht führen. Bevorzugt sind sie radikalisch polymerisierbar, insbesondere thermisch oder lichtinitiiert, und werden zusammen mit den Materialien thermoplastisch verarbeitet und zwischen den Materialien eingebracht.

Hierdurch entsteht eine Opakerschicht, insbesondere aus einem organischen Opaker, bevorzugt aus einem lichthärtenden Opaker, an der Gernzfläche zwischen den Materialien ausgebildet. Diese verhindert, dass die Fleischfarbe des Basismaterials in das hellere Zahnmaterial einscheint und so die natürliche Anmutung verfälscht. Ein etwaiger graustichig wirkenden Zahnfleischsaum wird vermieden, und das Chroma des gingiva- bzw. zahnfarbenen Materials wird nicht nachteilig beeinflußt.

Weitere Vorteile, Einzelheiten und Merkmale ergeben sich aus der nachfolgenden Beschreibung mehrerer Ausführungsbeispiele der Erfindung anhand der Zeichnung.

Es zeigen:
Fig. 1 einen schematischen Schnitt durch eine Ausführungsform eines Rohlings für eine erfindungsgemäße Dentalprothese;
Fig. 2 einen entsprechenden Schnitt durch eine weitere Ausführungsform;
Fig. 3 eine perspektivische Ansicht einer weiteren Ausführungsform eines Rohlings für die Herstellung einer erfindungsgemäßen Dentalprothese;
Fig. 4 eine schematische perspektivische Ansicht einer weiteren Ausführungsform eines erfindungsgemäßen Prothesenrohlings;
Fig. 5 eine schematische perspektivische Ansicht einer weiteren Ausführungsform eines erfindungsgemäßen Prothesenrohlings; und
Fig. 6 eine schematische perspektivische Ansicht einer weiteren Ausführungsform eines erfindungsgemäßen Prothesenrohlings.

Es ist ein Rohling 10 dargestellt, der aus einem zahnfarbenen Material 12 und einem fleischfarbenen Material 14 besteht. Er ist für die Herstellung einer Unterkiefer-Dentalprothese bestimmt.

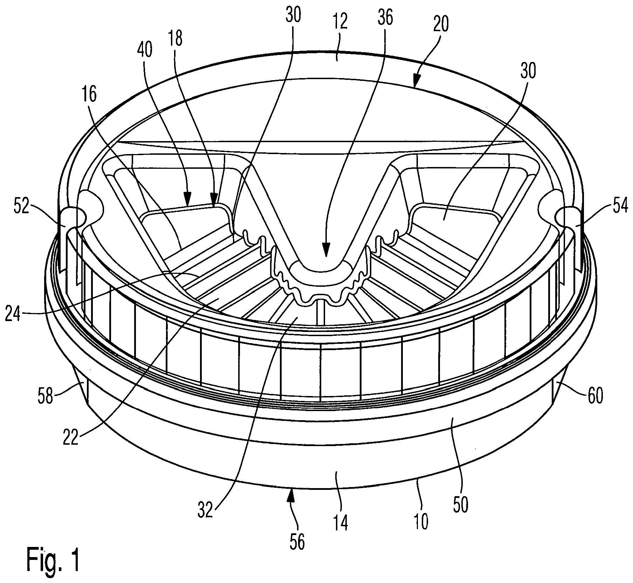

Der Rohling 10 ist im Wesentlichen scheibenförmig. Eine Grenzfläche 16 zwischen dem zahnfarbenen Material 12 und dem fleischfarbenen Material 14 ist in Fig. 1 ersichtlich. Erweist eine besonders geformte Vertiefung 18 im fleischfarbenen Material 14 auf. Von der Oberseite 20 des Rohlings 10 ausgehend erstreckt sich das Material 12 in die Vertiefung 18 hinein.

Das zahnfarbene Material 14 des Rohlings 10 hat einen Durchmesser oder eine Breite von mehr als 5 cm und insbesondere eine im wesentlichen flachzylindische Form mit einem Durchmesser/Höhen-Verhältnis von mehr als 2 zu 1, bevorzugt mehr als 3 zu 1.

Das fleischfarbene und das zahnfarbene Material 14 und 12 sind miteinander verbunden, z.B. durch Kleben, durch Polymerisieren und/oder durch einstückige Herstellung.

Die Vertiefung hat im Wesentlichen die Form eines U mit recht breiten Schenkeln, also eine Zahnbogenform. Die Grenzfläche 16 ist dort in besonderer Weise ausgebildet. Sie hat über den Verlauf des U hinweg eine Wellenform, und zwar entsprechend einem Gingivasaum, also im Wesentlichen entsprechend einer Kettenlinie.

Die Wellenform weist abwechselnd Wellentäler 22 und Wellenberge 24 auf. Die Wellentäler sind gleichzeitig auch Nuten, und die Wellenberge Rippen.

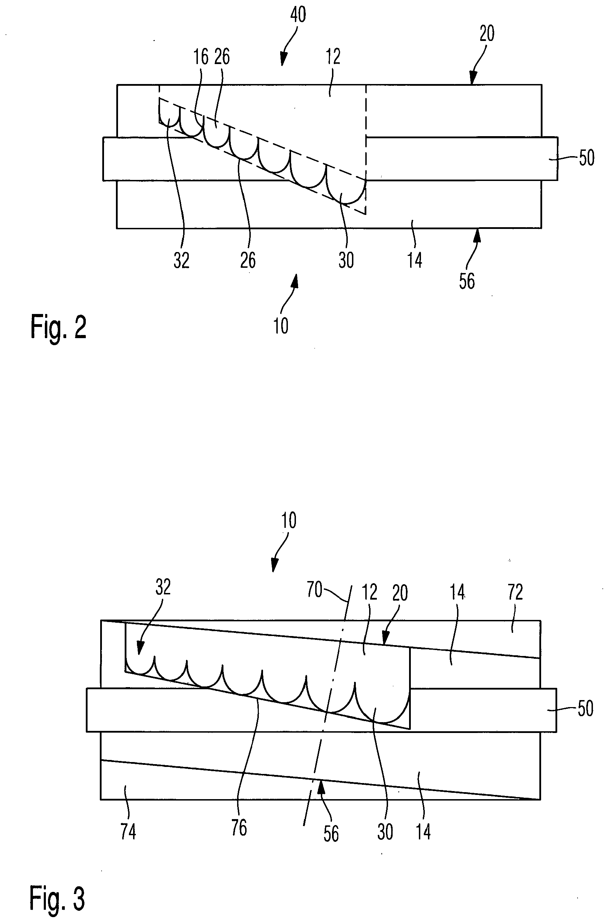

Die Spitzen der Wellenberge 24 und auch die - nach unten gewandten - Spitzen der Wellentäler 22 bilden je eine Kammlinie, wobei die untere Kammlinie 26 aus Fig. 2 ersichtlich ist.

Die Kammlinien verlaufen von distal 30 nach mesial 32 ansteigend. Die Grenzfläche 16 liegt also schräg in dem Rohling 10, und ist gleichsam vorne, also im Bereich der Anterioren, höher als hinten.

Dies bezieht sich auf den durchschnittlichen Verlauf der Grenzfläche 16, die tatsächlich wie ausgeführt wellenförmig ist.

Der Schrägstellungswinkel oder die Neigung der Grenzfläche 16 liegt hier im Durchschnitt bei 16 Grad.

Im Bereich der Frontzähne oder Anterioren verlaufen die Wellenberge und Wellentäler 24 und 22 von oral nach vestibulär betrachtet strahlenförmig. Sie erstrecken sich von einem Strahlen-Mittelpunkt 36 radial ausgehend nach außen.

Hingegen verlaufen sie im Bereich der Molaren und Prämolaren parallel zueinander. Die Schenkelbreite des U und damit die Breite der Vertiefung 18 beträgt deutlich mehr als es für die Formgebung von Zähnen erforderlich ist. Der Rohling 10 ist dafür bestimmt, sowohl große als auch kleine Zahnbögen realisieren zu können, indem Zähne radial innen, radial in der Mitte oder radial außen, bezogen auf den Mittelpunkt 36, gefräst werden.

Insofern wird vollinhaltlich auf die vorstehend genannte europäische Patentanmeldung Bezug genommen.

Insofern steht die gesamte Breite des U als Formgebungsbereich 40 für die Formgebung zur Verfügung.

Wie aus Fig. 1 ersichtlich ist, ist die Vertiefung 18 deutlich tiefer im distalen Bereich 30 als im medialen Bereich 32. Hierdurch entsteht eine deutlich größere Höhe des zahnfarbenen Materials 12 distal als medial. Durch diese Maßnahme rückt der Frontzahnbereich 32 an die Oberseite 20 des Rohlings 10 heran, und dort erforderliche Hinterschneidungen lassen sich mit kurzen Fräsern rasch und genau fräsen.

Aus Fig. 1 ist ferner ersichtlich, dass der Rohling 10 einen umlaufenden Einspannrand 50 aufweist. Der Einspannrand 50 hat die für Dental-Scheibenrohlinge übliche Form, und der scheibenförmige Rohling 10 einen Durchmesser zwischen 95 und 100 mm.

Oberhalb des Einspannrandes 50 erstreckt sich zurückspringend zahnfarbenes Material 12. Dort sind Nuten 52 und 54 vorgesehen, die asymmetrisch zueinander angeordnet sind, also nicht diametral einander gegenüber liegen, und als Verdrehsicherung dienen.

Zur Unterseite 56 des Rohlings 10 in sind zusätzlich Abflachungen 58 und 60 ausgebildet. Diese sind im Bereich des Materials 14 vorgesehen und ebenfalls asymmetrisch zueinander. Sie dienen der alternativen Einspannung verdrehsicher in neuere Fräsmaschinen.

Gemäß Fig. 2 verläuft die Grenzfläche 16 von distal 30 nach medial 32 ansteigend, und zwar in dieser Ausführungsform in einem Winkel von 22 Grad.

Die Okklusionsebene ist etwas unterhalb der Oberseite 20 vorgesehen, z.B. 1mm unterhalb dieser.

Die Grenzfläche 16 verläuft hier, also gemäß Fig. 2, gerade, und mit einer konstanten Steigung. Alternativ ist es auch möglich, ihr einen gebogenen oder beispielsweise einen S-förmigen Verlauf zu geben.

Bei der Ausführungsform gemäß den Fig. 2 und 3 ist lediglich der Bereich der Vertiefungen 18, also der Formgebungsbereich 40, mit weißem, also zahnfarbenem Material 12 gefüllt. Der Rest des Rohlings 10 besteht aus fleischfarbenem Material 14.

Die Grenzfläche 16 und die Kammlinie 26 verlaufen hier in einem Winkel von 15° bezogen auf die Fläche, die von dem Einspannrand 50 aufgespannt wird.

Dementsprechend ist der Teil des Rohlings, der von wegzufräsendem Material 12 und 14 eingenommen wird, deutlich geringer. Dies ist durch die Dreiecke 72 und 74 symbolisiert. Die Rohlingscheibe 10 kann flacher, also weniger hoch, ausgebildet sein als in der Ausführungsform gemäß Fig. 2.

Der Rohling 10 ist auch hier kreisscheibenförmig ausgebildet. Er weist eine Scheibenachse 70 und einen gegen die Scheibenachse 70 schrägen Einspannrand 50 auf, wobei diese Schrägstellung das Ansteigen der Grenzfläche 16 und die Neigung der Kammlinie 26 verstärkt.

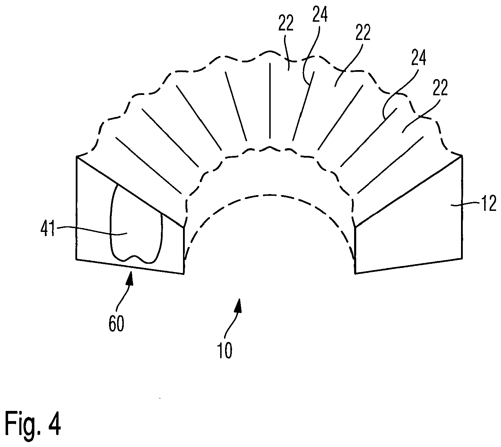

Aus Fig. 4 ist eine weitere Ausführungsform eines Rohlings 10 ersichtlich. Von dem Rohling ist lediglich das zahnfarbene Material 12 dargestellt, während die übrigen Teile sich beispielsweise gemäß Figur 3 erstrecken und ausgebildet sind.

An der in Fig. 3 unten dargestellte Seite erstreckt sich die Okklusionsebene 60. Dementsprechend ist ein Zahn 41 in Fig. 4 dergestalt in das Material 12 eingezeichnet, dass seine Okklusalseite zur Okklusionsebene 60 weist.

Im Unterschied zu den Ausführungsformen gemäß den Figuren 1 bis 3 sind in Fig. 4 die Berge, also die Rippen 24, in vestibulär-oraler Richtung geneigt, während sie sich beispielsweise gemäss Fig. 3 gerade, also parallel zur Okklusionsebene erstrecken.

Oral sind die Rippen 24 okklusionsnäher als vestibulär.

Der Winkel zwischen der Okklusionsebene 60 und und der Rippe 24 lässt sich in weiten Bereichen an die Erfordernisse anpassen. Beispielsweise kann der Winkel 10 bis um 20 Grad betragen, aber auch darüber.

Der Winkel kann auch für die einzelnen Zähne bzw Zahnzwischenräume unterschiedlich sein.

Die Berge 24 entsprechenden Zahnzwischenräumen und die Tälor 22 den Zähnen.

Die in Fig. 4 dargestellte Neigung bezieht sich sowohl auf die Berge 24 als auch auf die Täler 22.

Es hat sich gezeigt, dass durch die insofern vorgesehene Schrägstellung gerade bei großen Unterschieden zwischen Zahnbögen eine bessere Anpassung möglich ist.

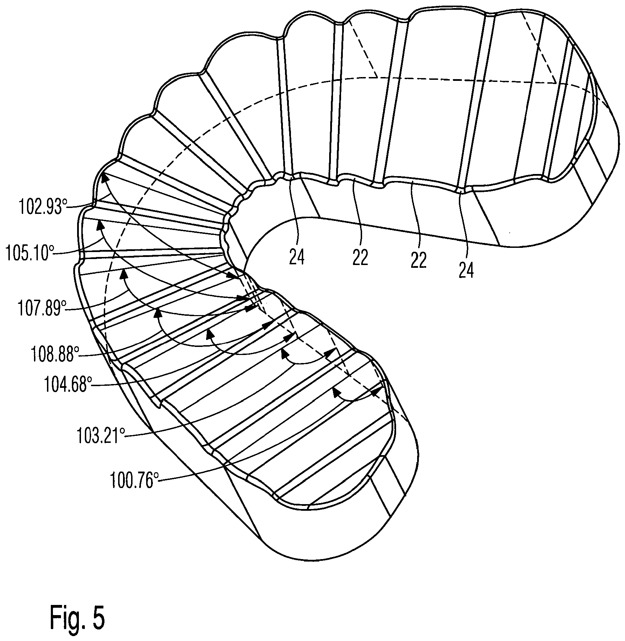

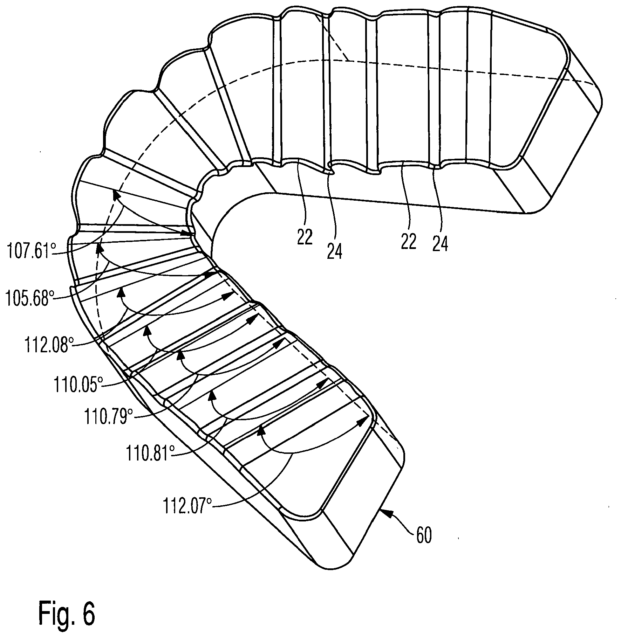

Beispielhafte Schrägstellungs-Winkel der Berge 24 sind aus Fig. 5 für den Unterkiefer und Fig. 6 sechs für den Oberkiefer ersichtlich. Die dort angegebenen Schrägstellungswinkel beziehen sich auf eine Normale zum Rohling, der scheibenförmig ausgebildet ist.

Bezogen auf die Okklusionsebene 60 sind die Winkel für den Unterkiefer gemäß Fig. 5 zwischen 10 Grad und 19 Grad und für den Oberkiefer zwischen 15 Grad und 23 Grad.

Es versteht sich, dass Anpassungen der Winkel und auch des Verlaufs der Kammlinie über den Zahnbogen betrachtet in weiten Bereichen je nach Erfordernis möglich sind.

## Patentansprüche

1. Ein- oder mehrteiliger dentaler Prothesenrohling, der aus einem fleischfarbenen Material (14) und einem zahnfarbenen Material (12), insbesondere je auf Kunststoffbasis, aufgebaut ist, wobei eine Okklusionsebene sich an der dem fleischfarbenen Material gegenüberliegenden Seite des zahnfarbenen Materials erstreckt, welche Materialien (12, 14) durch Kleben, durch Polymerisieren, durch Spritzgießen und/oder durch einstückige Herstellung miteinander verbunden sind, wobei die Grenzfläche (16) zwischen den Materialien - im Zahnbogenverlauf betrachtet - wellenförmig mit einander abwechselnden Nuten und Rippen (22,24), die Täler und Berge bilden, und im Bereich des Frontzahnbogens - in oral-vestibulärer Richtung betrachtet - strahlenförmig ausgebildet ist, **dadurch gekennzeichnet, dass** die Grenzfläche (16) zwischen dem zahnfarbenen und dem fleischfarbenen Material (12,14) - von distal nach mesial über den Verlauf des Zahnbogens betrachtet - zur Okklusionsebene hin in Wellen ansteigt, mit einer durchschnittlichen Steigung von 15 Grad oder mehr, insbesondere von 20 Grad bis 25 Grad oder mehr, und dass das zahnfarbene Material (12) im Molarbereich (30) eine größere Höhe in gingival-ocklusaler Richtung als im Frontzahnbereich (32) hat.

2. Ein- oder mehrteiliger dentaler Prothesenrohling nach Anspruch 1, **dadurch gekennzeichnet, dass** die Wellenberge (24) über den Verlauf des Zahnbogens eine Kammlinie (26) bilden, die gegen die Okklusionsebene und insbesondere gegen die den Zähnen benachbarte Seite des Rohlings (10) geneigt ist.

3. Ein- oder mehrteiliger dentaler Prothesenrohling nach einem der vorhergehenden Ansprüche, **dadurch gekennzeichnet, dass** die Kammlinie jedes Berges (24) oder mindestens eines Teiles der Berge (24) aus vestibulärer und in oraler Richtung betrachtet abfallend, also in Richtung der Gingiva, insbesondere in einem Winkel von 10 bis 40 Grad, bevorzugt zwischen 15 und 25 Grad verläuft, entweder gerade oder gebogen oder der Speekurve folgend, sämtlich dies zumindest in Teilbereichen der Länge.

4. Ein- oder mehrteiliger dentaler Prothesenrohling nach Anspruch 1, 2 oder 3, **dadurch gekennzeichnet, dass** die Breite der Täler (22) an die Breite des je zu erzeugenden Zahnes angepasst ist und insbesondere das Tal für den ersten Molar die größte Talbreite aufweist.

5. Ein- oder mehrteiliger dentaler Prothesenrohling nach einem der vorhergehenden Ansprüche, **dadurch gekennzeichnet, dass** die Berge (24) und Täler (22) über einen sich von oral nach vestibulär erstreckenden Formgebungsbereich (40) die gleiche Form aufweisen oder zumindest kongruent bleiben.

6. Ein- oder mehrteiliger dentaler Prothesenrohling nach einem der vorhergehenden Ansprüche, **dadurch gekennzeichnet, dass** innerhalb des Rohlings (10) ein im wesentlichen hufeisenförmiger, halbkreisringförmiger oder U-förmiger Formgebungsbereich (40) vorgesehen ist, der eine Grenzfläche (16) zwischen dem zahnfarbenen und dem fleischfarbenen Material in Wellenform aufweist.

7. Ein-oder mehrteiliger dentaler Prothesenrohling nach Anspruch 6, **dadurch gekennzeichnet, dass** das zahnfarbene Material (12) sich von der Grenzfläche (16) gemäß Anspruch 6 zur Okklusionsebene erstreckt, und insbesondere das fleischfarbene Material sich außerhalb des Formgebungsbereichs (40) bis zur Okklusionsebene erstreckt.

8. Ein- oder mehrteiliger dentaler Prothesenrohling nach Anspruch 6, **dadurch gekennzeichnet, dass** das zahnfarbene Material (12) sich von der Grenzfläche (12) gemäß Anspruch 6 zur Okklusionsebene oder ggf. über diese hinaus erstreckt, und auch außerhalb des Formgebungsbereichs (40).

9. Ein- oder mehrteiliger dentaler Prothesenrohling nach einem vorgehenden Ansprüche, **dadurch gekennzeichnet, dass** im Molarbereich (34), und ggf. im Prämolarbereich die von der Grenzfläche (16) gebildeten, Zahnzwischenräumen entsprechenden Rippen (24) sich in oral-vestibulärer Richtung betrachtet parallel zueinander erstrecken.

10. Ein- oder mehrteiliger dentaler Prothesenrohling nach einem der vorhergehenden Ansprüche, **dadurch gekennzeichnet, dass** im Frontzahnbereich (32) zur Erzeugung des strahlenförmigen Verlaufs die von der Grenzfläche (16) gebildeten, Zahnzwischenräumen entsprechenden Rippen (24) aus oraler und in vestibulärer Richtung betrachtet divergieren.

11. Ein- oder mehrteiliger dentaler Prothesenrohling nach einem der vorhergehenden Ansprüche, **dadurch gekennzeichnet, dass** der Rohling (10) kreisscheibenförmig ausgebildet ist und/oder einen gegen die Scheibenachse schrägen Einspannrand (50) aufweist, wobei diese Schrägstellung das Ansteigen der Grenzfläche gemäß Anspruch 1 und die Neigung der Kammlinie (26) gemäß Anspruch 2 verstärkt.

12. Ein- oder mehrteiliger dentaler Prothesenrohling nach Anspruch 11, **dadurch gekennzeichnet, dass** der Schrägstellungswinkel 1 bis 10 Grad und insbesondere etwa 5 Grad beträgt.

13. Ein- oder mehrteiliger dentaler Prothesenrohling nach Anspruch 6, **dadurch gekennzeichnet, dass** die Berge (24) aus vestibulärer und in oraler Richtung betrachtet abfallend, also sich der Okklusionsebene (60) annähernd, insbesondere in einem Winkel von 10 bis 40 Grad, bevorzugt zwischen 15 und 25 Grad verlaufen.

14. Ein- oder mehrteiliger dentaler Prothesenrohling nach einem der vorhergehenden Ansprüche, **dadurch gekennzeichnet, dass** eine zusätzliche Schicht aus einem Material mit abweichenden lichtbrechenden Eigenschaften, insbesondere aufgrund unterschiedlicher Brechungsindices dieses Materials gegenüber dem fleischfarbenen und dem zahnfarbenen Material (14,12), zwischen dem zahnfarbenen und dem fleischfarbenen Material angeordnet ist.

15. Ein- oder mehrteiliger dentaler Prothesenrohling nach einem der vorhergehenden Ansprüche, **dadurch gekennzeichnet, dass** der Rohling radial außen eine radial nach außen vorspringenden Rippe (50) aufweist, die bezogen auf die Höhe des Rohlings (10) mittig angeordnet ist.

16. Ein- oder mehrteiliger dentaler Prothesenrohling nach einem der vorhergehenden Ansprüche, **dadurch gekennzeichnet, dass** am Außenumfang des Rohlings (10) ein Einspannrand (50) mit einer radial nach außen vorspringenden Einspannrippe ausgebildet ist, und dass auf der einen Seite der Einspannrippe ein erstes Positionierungselement, insbesondere eine erste Verdrehsicherung, insbesondere mit asymmetrisch verteilten Verdrehsicherungsnuten (52,54), und auf der anderen Seite der Einspannrippe ein zweites Positionierungselement, insbesondere eine zweite Verdrehsicherung (58,60), insbesondere mit asymmetrisch verteilten Verdrehsicherungsflächen, ausgebildet ist.

17. Ein- oder mehrteiliger dentaler Prothesenrohling nach einem der vorhergehenden Ansprüche, **dadurch gekennzeichnet, dass** das zahnfarbene Material (14) des Rohlings (10) einen Durchmesser oder eine Breite von mehr als 5 cm und insbesondere eine im wesentlichen flachzylindrische Form mit einem Durchmesser/Höhen-Verhältnis von mehr als 2 zu 1, bevorzugt mehr als 3 zu 1, aufweist.

18. Verfahren zur Herstellung einer Dentalprothese aus einem ein- oder mehrteiligen dentalen Prothesenrohling, der aus einem fleischfarbenen Material (14) und einem zahnfarbenen Material (12), insbesondere je auf Kunststoffbasis, aufgebaut ist, wobei eine Okklusionsebene sich an der dem fleischfarbenen Material gegenüberliegenden Seite des zahnfarbenen Materials erstreckt, welche Materialien (12,14) durch Kleben, durch Polymerisieren, durch Spritzgießen und/oder durch einstückige Herstellung miteinander verbunden sind, wobei die Grenzfläche (16) zwischen den Materialien - im Zahnbogenverlauf betrachtet - wellenförmig mit einander abwechselnden Nuten und Rippen (22,24), die Täler und Berge bilden, und im Bereich des Frontzahnbogens - in oral-vestibulärer Richtung betrachtet - strahlenförmig ausgebildet sind, **dadurch gekennzeichnet, dass** die Grenzfläche (16) zwischen dem zahnfarbenen und dem fleischfarbenen Material (12,14) - von distal nach mesial über den Verlauf des Zahnbogens betrachtet - zur Okklusionsebene hin in Wellen ansteigt, mit einer durchschnittlichen Steigung von 15 Grad oder mehr, insbesondere von 20 Grad bis 25 Grad oder mehr, und dass das zahnfarbene Material (12) im Molarbereich (30) eine größere Höhe in gingival-ocklusaler Richtung als im Frontzahnbereich (32) hat.

## Claims

1. A one-part or multi-part dental prosthesis blank, which is designed of a flesh-colored material (14) and a tooth-colored material (12), in particular each being based on plastic material, wherein an occlusal plane extends on the side of the tooth-colored material opposite to the flesh-colored material, which materials (12, 14) are bound to each another by bonding, by polymerization, by injection molding and/or by integral production, the boundary (16) between the materials - as viewed in the direction of the tooth arch course - being wave-shaped with alternating grooves and ribs (22, 24) forming peaks and troughs, and in the region of the anterior arch - as viewed in the oral-vestibular direction - being of radiant shape, **characterized in that** the boundary (16) between the tooth-colored and flesh-colored material (12, 14) - as viewed from the distal to mesial direction along the dental arch course - undulatingly rises towards the occlusal plane with an average slope of 15 degrees or more, in particular from 20 degrees to 25 degrees or more, and **in that** the tooth-colored material (12) in the molar region (30) has a greater height in the gingival-occlusal direction than in the anterior tooth region (32).

2. The one- or multi-part dental prosthesis blank according to claim 1, **characterized in that** the wave peaks (24) along the dental arch course form a crest line (26) which is inclined towards the occlusal plane and in particular towards the side of the blank (10) adjacent to the teeth.

3. The one-piece or multi-piece dental prosthesis blank according to one of the preceding claims, **characterized in that** the crest line of each peak (24) or at least part of the peaks (24) especially extends at an angle of 10 to 40 degrees, preferably between 15 and 25 degrees, either straight or curved or extends along the curve of Spee, all this being applicable at least to portions of the length, as viewed from the vestibular direction, and as viewed declining in the oral direction, i.e. in the direction of the gingiva.

4. The one-piece or multi-piece dental prosthesis blank according to claim 1, 2 or 3, **characterized in that** the width of the troughs (22) is adapted to the width of the tooth to be produced, wherein especially the trough for the first molar has the largest trough width.

5. The one-piece or multi-piece dental prosthesis blank according to one of the preceding claims, **characterized in that** the peaks (24) and troughs (22) have the same shape or at least remain congruent over a shaping area (40) extending from the oral to vestibular direction.

6. The one-piece or multi-piece dental prosthesis blank according to one of the preceding claims, **characterized in that** a substantially horseshoe-shaped, semicircular or U-shaped shaping region (40) is provided within the blank (10), which has a boundary (16) between the undulating tooth-colored and flesh-colored material.

7. The one-piece or multi-piece dental prosthesis blank according to claim 6, **characterized in that** the tooth-colored material (12) extends from the boundary (16) according to claim 6 to the occlusal plane, and especially the flesh-colored material extends outside the shaping region (40) towards the occlusal plane.

8. The one-piece or multi-piece dental prosthesis blank according to claim 6, **characterized in that** the tooth-colored material (12) extends from the boundary (12) according to claim 6 towards the occlusion plane or possibly beyond, and also extends outside the shaping region (40).

9. The one-piece or multi-piece dental prosthesis blank according to one of the preceding claims, **characterized in that** in the molar region (34), and optionally in the premolar region, the ribs (24) formed by the boundary (16) and corresponding to interdental spaces extend parallel to each another, as viewed in the oral-vestibular direction.

10. The one-piece or multi-piece dental prosthesis blank according to one of the preceding claims, **characterized in that**, in the anterior tooth region (32), the ribs (24) corresponding to interdental spaces and formed by the boundary (16)) diverge from each other, as viewed from the oral and in the vestibular direction, to produce the radial course.

11. The one-piece or multi-piece dental prosthesis blank according to one of the preceding claims, **characterized in that** the blank (10) is circular disc-shaped and/or has a clamping edge (50) inclined towards the disc axis, said inclination increasing the slope of the boundary according to claim 1 and the inclination of the crest line (26) according to claim 2.

12. The one-piece or multi-piece dental prosthesis blank according to claim 11, **characterized in that** the inclination angle is 1 to 10 degrees and especially about 5 degrees.

13. The one-piece or multi-piece dental prosthesis blank according to claim 6, **characterized in that** the peaks (24) extend approximately from the vestibular direction, and, as viewed in the oral direction, extends in a declining manner, i.e. extends approaching the occlusal plane (60), especially at an angle of 10 to 40 degrees, preferably between 15 and 25 degrees.

14. The one-piece or multi-piece dental prosthesis blank according to one of the preceding claims, **characterized in that** an additional layer of a material with differing light-refracting properties, especially due to different refractive indices of this material as compared to the flesh-colored and the tooth-colored materials (14, 12), is arranged between the tooth-colored and the flesh-colored material.

15. The one-piece or multi-piece dental prosthesis blank according to one of the preceding claims, **characterized in that** the blank comprises a radially outwards projecting rib (50) on the radial outside, which is centrally arranged with respect to the height of the blank (10).

16. The one-piece or multi-piece dental prosthesis blank according to one of the preceding claims, **characterized in that** a clamping edge (50) with a radially outwards projecting clamping rib is formed on the outer circumference of the blank (10), and **in that** a first positioning element is arranged on one side of the clamping rib, especially a first anti-rotational element, especially with asymmetrically distributed anti-rotational grooves (52, 54) is formed, and on the other side of the clamping rib a second positioning element, especially a second anti rotational element (58, 60), especially with asymmetrically distributed anti rotational surfaces is formed.

17. The one-piece or multi-piece dental prosthesis blank according to one of the preceding claims, **characterized in that** the tooth-colored material (14) of the blank (10) has a diameter or width of more than 5 cm and especially has an essentially flat-cylindrical shape with a diameter/height ratio of more than 2 to 1, preferably more than 3 to 1.

18. A method of manufacturing a dental prosthesis from a one-piece or multi-piece dental prosthesis blank, which is designed of a flesh-colored material (14) and a tooth-colored material (12), in particular each being based on plastic material, wherein an occlusal plane extends on the side of the tooth-colored material opposite to the flesh-colored material, which materials (12, 14) are bound to each another by bonding, by polymerization, by injection molding and/or by integral production, the boundary (16) between the materials - as viewed in the direction of the tooth arch course - being wave-shaped with alternating grooves and ribs (22, 24) forming peaks and troughs, and in the region of the anterior arch - as viewed in the oral-vestibular direction - being of radiant shape, **characterized in that** the boundary (16) between the tooth-colored and flesh-colored material (12, 14) - as viewed from the distal to mesial direction along the dental arch course - undulatingly rises towards the occlusal plane with an average slope of 15 degrees or more, in particular from 20 degrees to 25 degrees or more, and **in that** the tooth-colored material (12) in the molar region (30) has a greater height in the gingival-occlusal direction than in the anterior tooth region (32).

## Revendications

1. Lingotin de prothèse dentaire en un ou plusieurs éléments, qui est constituée d'un matériau couleur chair (14) et d'un matériau couleur dent (12), en particulier chacun à base de matière plastique, où un plan d'occlusion s'étend du côté du matériau couleur dent opposé au matériau couleur chair, où lesdits matériaux (12, 14) sont reliés entre eux par collage, par polymérisation, par moulage par injection et/ou par production en une seule pièce, où la surface de délimitation (16) entre les matériaux - vue sur le parcours de l'arcade dentaire - en forme d'onde avec une alternance de rainures et de nervures (22, 24), qui forment des creux et des cretes et dans la région de l'arcade antérieure - vue dans le sens oral-vestibulaire - est configuré sous forme de rayons, **caractérisé en ce que** la surface de délimitation (16) entre la matière de la couleur des dents et celle de la couleur de la chair (12, 14) - vue de distal à mésial sur le parcours de l'arcade dentaire - s'élève par vagues vers le plan occlusal, avec une pente moyenne de 15 degrés ou plus, en particulier de 20 degrés à 25 degrés ou plus, et que le matériau de la couleur des dents (12) dans la région molaire (30) a une plus grande hauteur dans le sens gingival-occlusal que dans la région antérieure (32).

2. Lingotin de prothèse dentaire en un ou plusieurs éléments selon la revendication 1, **caractérisé en ce que** les crêtes d'ondes (24) forment une ligne de crête (26) sur le parcours de l'arcade dentaire qui est inclinée vers le plan occlusal et en particulier vers le côté du lingotin (10) adjacent aux dents

3. Lingotin de prothèse dentaire en un ou plusieurs éléments selon l'une des revendications précédentes, **caractérisé en ce que** la ligne de crête de chaque crête (24) ou au moins d'une partie de la crête (24) s'étend inclinée vers le bas vue du sens vestibulaire et vers la bouche, c'est-à-dire dans la direction de la gencive, en particulier sous un angle de 10 à 40 degrés, de préférence entre 15 et 25 degrés, soit en ligne droite, soit en courbe, soit suivant la courbe de Spee, tout cela au moins dans des régions partielles de la longueur.

4. Lingotin de prothèse dentaire en un ou plusieurs éléments selon l'une des revendications 1, 2 ou 3, **caractérisé en ce que** la largeur des creux (22) est adaptée à la largeur de la dent à réaliser dans chaque cas et en particulier le creux pour la première molaire a la plus grande largeur de creux.

5. Lingotin de prothèse dentaire en un ou plusieurs éléments selon l'une des revendications précédentes, **caractérisé en ce que** les crêtes (24) et les creux (22) ont la même forme ou du moins restent congruents sur une zone de mise en forme (40) s'étendant de l'oral au vestibulaire.

6. Lingotin de prothèse dentaire en un ou plusieurs éléments selon l'une des revendications précédentes, **caractérisé en ce que** une zone de mise en forme (40) sensiblement en forme de fer à cheval, semi-circulaire ou en forme de U est prévue dans le lingotin (10), qui présente une surface de délimitation (16) entre le matériau de couleur de dent et de couleur chair sous forme d'onde.

7. Lingotin de prothèse dentaire en un ou plusieurs éléments selon la revendication 6, **caractérisé en ce que** le matériau (12) de la couleur des dents s'étend de la surface de délimitation (16) selon la revendication 6 jusqu'au plan d'occlusion, et en particulier le matériau de la couleur de la chair s'étend en dehors de la zone de mise en forme (40) jusqu'au plan d'occlusion.

8. Lingotin de prothèse dentaire en un ou plusieurs éléments selon la revendication 6, **caractérisé en ce que** le matériau (12) de la couleur des dents s'étend de la surface de délimitation (12) selon la revendication 6 jusqu'au plan d'occlusion ou, le cas échéant, au-delà de celui-ci, et également en dehors de la zone de mise en forme (40),

9. Lingotin de prothèse dentaire en un ou plusieurs éléments selon une revendication précédente, **caractérisé en ce que** dans la région molaire (34), et éventuellement dans la région prémolaire, les nervures (24) formées par la surface de délimitation (16) et correspondant aux espaces interdentaires s'étendent parallèlement les unes aux autres lorsqu'on les observe dans la direction bucco-vestibulaire.

10. Lingotin de prothèse dentaire en un ou plusieurs éléments selon l'une des revendications précédentes, **caractérisé en ce que** dans la région antérieure (32), pour produire le tracé en forme de rayons, les nervures (24) formées par la surface de délimitation (16) et correspondant aux espaces interdentaires divergent les unes des autres par rapport à la direction orale et vestibulaire, vu dans la direction vestibulaire.

11. Lingotin de prothèse dentaire en un ou plusieurs éléments selon l'une des revendications précédentes, **caractérisé en ce que** le lingotin (10) est en forme de disque circulaire et/ou présente un bord de serrage (50) incliné par rapport à l'axe du disque, où cette inclinaison augmente la montée de la surface de déiimiiaiion selon la revendication 1 et l'inclinaison de la ligne de crête (26) selon la revendication 2.

12. Lingotin de prothèse dentaire en un ou plusieurs éléments selon la revendication 11, **caractérisé en ce que** l'angle d'inclinaison est de 1 à 10 degrés et en particulier d'environ 5 degrés

13. Lingotin de prothèse dentaire en un ou plusieurs éléments selon la revendication 6, **caractérisé en ce que** les crêtes (24) partent du vestibulaire et, vus dans la direction orale, sont inclinés vers le bas, c'est-à-dire se rapprochant du plan occlusal (60), en particulier à un angle de 10 à 40 degrés, de préférence entre 15 et 25 degrés.

14. Lingotin de prothèse dentaire en un ou plusieurs éléments selon l'une des revendications précédentes, **caractérisé en ce qu'**une couche supplémentaire d'un matériau ayant des propriétés de réfraction différentes, notamment en raison d'indices de réfraction différents de ce matériau par rapport à la matière de couleur chair et de la couleur des dents (14, 12), est disposée entre la matière de la couleur des dents et celle de la couleur de la chair.

15. Lingotin de prothèse dentaire en un ou plusieurs éléments selon l'une des revendications précédentes, **caractérisé en ce que** le lingotin présente une nervure (50) faisant saillie radialement vers l'extérieur, qui est disposée au centre par rapport à la hauteur du lingotin (10).

16. Lingotin de prothèse dentaire en un ou plusieurs éléments selon l'une des revendications précédentes**, caractérise en ce qu'**un bord de serrage (50) avec une nervure de serrage faisant saillie radialement vers l'extérieur est formé sur la circonférence extérieure du lingotin (10), et **en ce qu'**un premier élément de positionnement est disposé sur un côté de la nervure de serrage, en particulier un premier élément anti-rotation, en particulier avec des rainures anti-rotation réparties de manière asymétrique (52, 54), et de l'autre côté de la nervure de serrage, un deuxième élément de positionnement, en particulier un deuxième élément anti-rotation (58, 60), en particulier avec des surfaces anti-rotation réparties de manière asymétrique, est formé.

17. Lingotin de prothèse dentaire en un ou plusieurs éléments selon l'une des revendications précédentes, **caractérisé en ce que** la matière (14) du lingotin (10), de la couleur des dents, présente un diamètre ou une largeur de plus de 5 cm et en particulier une forme cylindrique sensiblement plate avec un rapport diamètre/hauteur de plus de 2 à 1, de préférence de plus de 3 à 1.

18. Procédé de fabrication d'une prothèse dentaire à partir d'un lingotin de prothèse dentaire en un ou plusieurs éléments, qui est constituée d'un matériau couleur chair (14) et d'un matériau couleur dent (12), en particulier chacun à base d'une matière plastique, où un plan d'occlusion s'étend sur le côté du matériau couleur dent opposé au matériau couleur chair, où lesdits matériaux (12, 14) sont reliés entre eux par collage, par polymérisation, par moulage par injection et/ou par production d'une seule pièce, la surface de délimitation (16) entre les matériaux - vue au cours de l'arc dentaire - étant ondulée avec une alternance de rainures et de nervures (22, 24), qui forment des creux et des crêtes, et dans la région de l'arcade antérieure - vue dans le sens oral-vestibulaire - est configuré sous forme de rayons, **caractérisés en ce que** la surface de délimitation (16) entre la matière de la couleur des dents et celle de la couleur de la chair (12, 14) - vu de distal à mésial sur ie parcours de l'arcade dentaire s'élève par vagues vers le plan occlusal, avec une pente moyenne de 15 degrés ou plus, en particulier de 20 degrés à 25 degrés ou plus, et que le matériau de la couleur des dents (12) dans la région molaire (30) a une plus grande hauteur dans le sens gingival-occlusal que dans la région antérieure (32).
